# EUROPÄISCHE PATENTSCHRIFT

(11) **EP 2 045 030 B1**
(45) Veröffentlichungstag und Bekanntmachung des Hinweises auf die Patenterteilung: **11.07.2012**
(21) Anmeldenummer: 07019266.1
(22) Anmeldetag: 01.10.2007
(51) Int. Cl.: B23B 5/12

(54) **Verfahren zum Betrieb eines Schälkopfes**
Method for using a peeling head
Méthode pour l'usage d'une tête d'écroûtage

(43) Veröffentlichungstag der Anmeldung: 08.04.2009
(73) Patentinhaber: Jankowski GmbH & Co. KG, 56593 Horhausen (DE)
(72) Erfinder: Fischer, Clemens, 56593 Horhausen (DE)
(74) Vertreter: Schwöbel, Thilo K.

(56) Entgegenhaltungen:
- EP-A- 0 037 429
- DE-A1- 2 012 324
- DE-A1- 2 139 990
- DE-A1- 3 512 831
- DE-B- 1 063 008
- DE-C- 900 042
- GB-A- 1 128 210
- JP-A- 2003 117 714
- US-A- 2 394 381
- US-A- 3 581 612

## Beschreibung

Die vorliegende Erfindung betrifft ein Verfahren zum Betrieb des Schälkopfes.

### Stand der Technik

Produkte aus stangenförmigem Material, insbesondere Produkte aus Draht, Walzdraht, Rohre oder Stangen, werden in der Regel vor ihrer Endverarbeitung geschält, beispielsweise um die Oberflächenbeschaffenheit gegenüber einer beispielsweise durch den Einfluss von Korrosion und/oder mechanischen Beschädigungen, Rissen oder entkohlten Zonen beeinträchtigten Oberfläche zu verbessern. Dies geschieht typischerweise mit Hilfe einer Schälmaschine, welche eine obere Schicht des Schälgutes entfernt, so dass anschließend ein rostfreies, sauberes Produkt zur Weiterverarbeitung zur Verfügung steht. Auch Unreinheiten oder Unebenheiten an der Oberfläche können auf diese Weise entfernt werden. Anschließend kann das (überwiegende) Metallprodukt verarbeitet werden und gegen Umwelteinflüsse beispielsweise durch Lackierung, Verzinkung, Beschichtung oder dergleichen geschützt werden.

Bei Walzdraht bzw. generell bei Draht erfolgt eine derartige Vorbereitung gewöhnlich in zwei Stufen, wobei in einer ersten Stufe die Oberfläche des Drahtes von Unreinheiten und Unebenheiten mittels einer Drahtschälmaschine befreit wird. Dabei wird die oberste Schicht mit Hilfe von Schälmessern abgetragen. Anschließend wird der Draht in einer Drahtziehvorrichtung auf den gewünschten Nenndurchmesser gebracht. Aus Kostengründen - sowohl hinsichtlich des Materialverbrauchs als auch hinsichtlich des anfallenden Abfalls - ist es wichtig, dass die Drahtschälmaschine nur soviel Material wie nötig abträgt, da der gewünschte Nenndurchmesser des Drahtes häufig mit Hilfe einer Drahtziehvorrichtung erreicht wird. Auf diese Weise wird kein Material verschwendet. Daher muss der Schälkopf bezüglich seines Bearbeitungsdurchmessers einstellbar sein und sollte sich an verschiedene Stärken bzw. Durchmesser des Schälgutes anpassen können. Beides erfordert eine radiale Verstellbarkeit der Schälmesser.

Schälköpfe, die eine radiale Verstellbarkeit der Schälmesser aufweisen, sind an sich bekannt. Beispielsweise offenbart die Druckschrift DE 21 39 990 A1 einen Schälkopf, bei dem Schälmesser um eine radial gerichtete Achse dreheinstellbar gelagert sind und die Dreheinstellung mit der Radialverstellung gekoppelt ist. Die Radialverstellung ist dabei mit Hilfe eines Stellringes vorgesehen, an dessen Keilfläche sich eine Anlagefläche der Schälmesser abstützt. Über Zug- und Druckstangen ist die Keilfläche des Stellringes verschiebbar, wodurch die Schälmesser radial nach innen bzw. nach außen gedrückt werden. Die Schneidmesser sind konkav geformt und sind drehbar auf einer radial gerichteten Achse drehbar gelagert, um sich an die Oberflächenform anpassen zu können. Die Druckschrift DE 35 12 831 A1 offenbart einen Schälkopf mit mindesten einem Werkzeugträger, der mehreren Schälmesseranordnungen umfasst, wobei jeder Werkzeugträger einzeln zum Schälgut hin oder vom Schälgut weg bewegt werden kann. Zum Wechseln einer Schälmesseranordnung kann der Werkzeugträger zudem gedreht werden, wobei der Schälkopf zum Wechseln der Schälmesseranordnung nicht unbedingt in Ruhestellung gebracht werden muss.

Ein Verfahren zum Betrieb eines Schälkopfes, der die Merkmale des Oberbegriffs des Anspruchs 1 aufweist, ist aus der Druckschrift US 3 581 612 A bekannt, welcher radial verstellbare Schneidmesser aufweist, deren Bearbeitungsdurchmesser mittels einer zwischen die Schneidmesser einführbaren Messiehre einstellbar sind. Nachteiligerweise ist somit eine radiale Einstellung der Schneidmesser nicht möglich, wenn sich ein Schneidgut im Schälkopf befindet.

Weitere Schälköpfe sind aus den Druckschriften GB 1 128 210 A, DE 900 042 C und EP 0 037 429 A bekannt.

Die bekannten Schälköpfe sind verhältnismäßig kompliziert aufgebaut und erfordern daher eine Vielzahl von vergleichsweise kompliziert zu fertigenden Bauteilen, woraus ein vergleichsweise hoher Preis pro Schälkopf resultiert. Insbesondere ist es technisch sehr aufwändig, eine Zustellbewegung der Schälmesser zur Änderung des Bearbeitungsdurchmessers (etwa zur Feinjustage der abzuschälenden Materialschicht) während der Rotation des Schälkopfes zu realisieren. Es sind Antriebe für die Bewegung der Schälmesser notwendig, die mit dem Schälkopf rotieren müssen, da von außen keine oder nur schwer eine Kraft zugeführt werden kann, wenn sich der Schälkopf in Rotation befindet. Daher sind derartige Schälköpfe deutlich schwerer und größer und erfordern einen größeren Bauraum bzw. eine aufwändigere Lagerung. Aufgrund ihrer Vielzahl an beweglichen Teilen sind sie zudem verschleißanfälliger, so dass ein erhöhter Wartungsaufwand resultiert.

### Offenbarung der Erfindung

Vorliegend wird ein Schälkopf zur Verfügung beschrieben, der eine Radialverstellung der Schälmesser aufweist, aber trotzdem sehr einfach aufgebaut und kostengünstig ist.

Es handelt sich um einen Schälkopf für eine Drahtschälmaschine, wobei der Schälkopf zum Umlauf um ein Schälgut vorgesehen ist, wobei der Schälkopf Schälmesser aufweist, die um eine Drehachse angeordnet sind, wobei die Schälmesser einen einstellbaren Bearbeitungsdurchmesser des Schälgutes definieren und in ihrer radialen Position zur Einstellung des Bearbeitungsdurchmessers veränderbar sind, wobei der Bearbeitungsdurchmesser ausschließlich in einem Betriebsmodus änderbar ist, in dem sich der Schälkopf gegenüber dem Schälgut in einem ruhenden Zustand befindet. Da der Bearbeitungsradius der Schälmesser nur im ruhenden Zustand änderbar ist, ist es vorteilhaft möglich, einen Schälkopf zur Verfügung zu stellen der sehr einfach aufgebaut ist und nur wenige bewegliche Teile aufweist. Dadurch lässt sich der Schälkopf wesentlich einfacher und besonders kostengünstig herstellen.

Besonders bevorzugt ist der Schälkopf insbesondere in Form eines Drehfutters ausgeführt, welches mindestens eine erste und eine zweite Futterbacke umfasst. Dabei ist an der ersten Futterbacke eine erste Schälmesserhalterung und an der zweiten Futterbacke eine zweite Schälmesserhalterung befestigt. An der ersten Futterbacke ist wiederum ein erstes Schälmesser und an der zweiten Futterbacke ein zweites Schälmesser befestigt. Da Drehfutter sehr einfach und robust aufgebaut sind, erfordert ein Schälkopf in Form eines Drehfutters einen sehr geringen Wartungsaufwand. Zudem sind Drehfutter eine handelsübliche Ware und werden in vielen Bereichen der Industrie eingesetzt, wodurch eine Drahtschälmaschine mit einem Schälkopf in Form eines Drehfutters vergleichsweise kostengünstig ist. Da das Material, aus dem Schälmesser gefertigt sind, sehr teuer ist, können die Schälmesser auch in Form einer Wendeplatte ausgeführt werden. Die Wendeplatte umfasst mindestens zwei Messerklingen, die sich an unterschiedlichen Seiten der Platte befinden. Ist eine der Messerklingen abgenutzt, so wird die Wendeplatte derart gedreht, dass die noch unbenutzte Klinge die Position der abgenutzte Klinge einnimmt. In ruhendem Zustand des Schälkopfes relativ zum Schälgut bzw. relativ zum Draht wird das Schälmesser bzw. die Mehrzahl von Schälmesser auf das Schälgut gepresst bzw. in eine oberflächennahe Materialschicht des Schälgutes eingepresst. Entsprechend der Einpressung wird dann bei einer Relativbewegung zwischen Schälkopf und Draht bzw. zwischen Schälkopf und Schälgut eine Materialschicht von dem Schälmesser bzw. von der Mehrzahl von Schälmessern von der Oberfläche des Schälgutes abgenommen.

In einer bevorzugten Ausführung umfasst das Drehfutter vier Futterbacken. Dadurch lässt sich eine besonders homogene Bearbeitung der Oberfläche des Schälgutes gewährleisten, da durch das Pressen von gleichzeitig vier Schälmessern auf das Schälgut störende Vibrationen gemindert werden können.

Ein Schälkopf kann beispielsweise in einer Anordnung zur Vorbereitung von Draht eingesetzt werden. Eine derartige Anordnung umfasst folgende Arbeitsstationen:
- eine Drahtschälmaschine um den Draht von Unreinheiten und Unebenheiten zu befreien
- eine Drahtziehvorrichtung um den gewünschten Durchmesser des Drahtes zu erzielen und
- eine Ziehscheibe, die wenigstens den größten Teil der Kraft aufbringt, um den Draht durch die vorrangegangenen beiden Stationen zu ziehen.

Durch die Kombination einer Drahtschälmaschine mit einer Drahtziehvorrichtung ist es vorteilhaft möglich, neben Schrauben, Nägeln oder Nieten auch Biegeteile oder Ketten zu fertigen. Der von der Anordnung zur Vorbereitung von Draht bereitgestellte Draht kann im Anschluss in einer Drahtverarbeitungsstation weiter verarbeitet werden. Besonders bevorzugt bringt die Ziehscheibe zumindest den überwiegenden Teil der Kraft auf, um den Draht von der Drahtschälmaschine abzuziehen und durch die Drahtziehvorrichtung zu ziehen.

Gegenstand der vorliegenden Erfindung betrifft ein Verfahren gemäß Anspruch 1. Hierdurch ist die Einstellung des vom Draht mittels des Schälkopfes abzunehmenden Materials besonders einfach und schnell möglich, nämlich durch die Einstellung des Bearbeitungsdurchmessers des Schälkopfes im ruhenden Zustand des Schälkopfes relativ zum Draht bzw. zum Schälgut. Hierdurch ist es ferner vorteilhaft möglich, dass lediglich geringe Umrüstzeiten etwa bei einem Wechsel bzw. eines Umdrehens der Schälmesser oder auch bei einem Wechsel der Drahtvorratsrolle (sogenannte Coils) erforderlich sind.

Erfindungsgemäß weist das Drehfutter bevorzugt eine Einstellvorrichtung auf, um die mit den Futterbacken verbundenen Schälmesser auf das Schälgut zu pressen, wobei die Einstellvorrichtung für den Betrieb mit Handkraft vorgesehen ist. Die Einstellvorrichtung ist insbesondere als ein Zustellgetriebe bzw. als ein mechanisches Übersetzungsgetriebe mit einer Übersetzung derart vorgesehen, dass beispielsweise mittels einer Drehung der Einstellvorrichtung um etwa eine Viertelumdrehung (90°) eine radiale Zustellung der Schälmesser um etwa 0,05 mm (d.h. eine Durchmesserveränderung des Bearbeitungsdurchmessers um etwa 0,1 mm) erfolgt. Erfindungsgemäß kann es sich bei der Einstellvorrichtung um eine Einzelzustellvorrichtung handeln (mittels der jedes Schälmesser einzeln radial verstellbar ist) oder auch um eine zentrische Zustellvorrichtung (mittels der über eine Einstellvorrichtung alle Schälmesser radial verstellbar sind).

Zum Betrieb des Schälkopfes werden in einem ersten Schritt die Schälmesser durch eine Verstellung des Drehfutters mittels der Einstellvorrichtung um einige Zehntel Millimeter in das Schälgut gepresst, bevorzugt etwa 0,1 bis etwa 0,5 Millimeter, besonders bevorzugt etwa 0,2 bis etwa 0,3 Millimeter. Dies geschieht mit Hilfe der Einstellvorrichtung, die ein Benutzer von Hand bedient. Es ist vorgesehen, dass zur Bedienung der Einstellvorrichtung eine ausreichende Zustellung der Schälmesser erzielt wird und insbesondere ein Drehmoment von 20 bis 100 Nm aufgebracht werden muss. Das aufzubringende Drehmoment hängt allerdings auch von der Beschaffenheit des Schälgutes ab, so dass die Erfahrung des Nutzers über das endgültig aufzubringende Drehmoment entscheidet. Sollte zu viel oder zu wenig Material vom Schälgut abgetragen werden, so muss das Drehmoment angepasst werden. Während des gesamten ersten Schrittes ist es erfindungsgemäß vorgesehen, dass sich der Schälkopf in einem Ruhezustand befindet, d.h., dass sowohl die Bewegung das Schälgutes längs zur Drehachse, als auch die Rotation des Schälkopfes gestoppt ist. In einem zweiten Schritt wird der Schälkopf bzw. das Drehfutter in Rotation um das Schälgut versetzt. In einem dritten Schritt wird das Schälgut längs zur Drehachse in Bewegung versetzt, so dass wenigstens beim dritten Verfahrensschritt Unebenheiten und Unreinheiten von der Oberfläche des Schälgutes entfernt werden. Die Bewegung des Schälgutes längs zur Drehachse kann beispielsweise mit Hilfe einer Ziehscheibe realisiert werden.

### Kurze Beschreibung der Zeichnungen

Ausführungsbeispiele der Erfindung sind in der Zeichnung dargestellt und in der nachfolgenden Beschreibung näher erläutert. Die Ausführungen sind lediglich beispielhaft und schränken den allgemeinen Erfindungsgedanken nicht ein.

Es zeigen
- **Figur 1**: eine Querschnittsdarstellung des Schälkopfes, wobei die Schälmesser nicht in das Schälgut gepresst sind.
- **Figur 2**: eine Querschnittsdarstellung des, wobei die Schälmesser wenige Zehntel Millimeter in das Schälgut gepresst sind.
- **Figur 3**: eine schematische Außendarstellung des Schälkopfes
- **Figur 4**: eine schematische Darstellung der Anordnung zur Vorbereitung von Draht

### Ausführungsform(en) der Erfindung

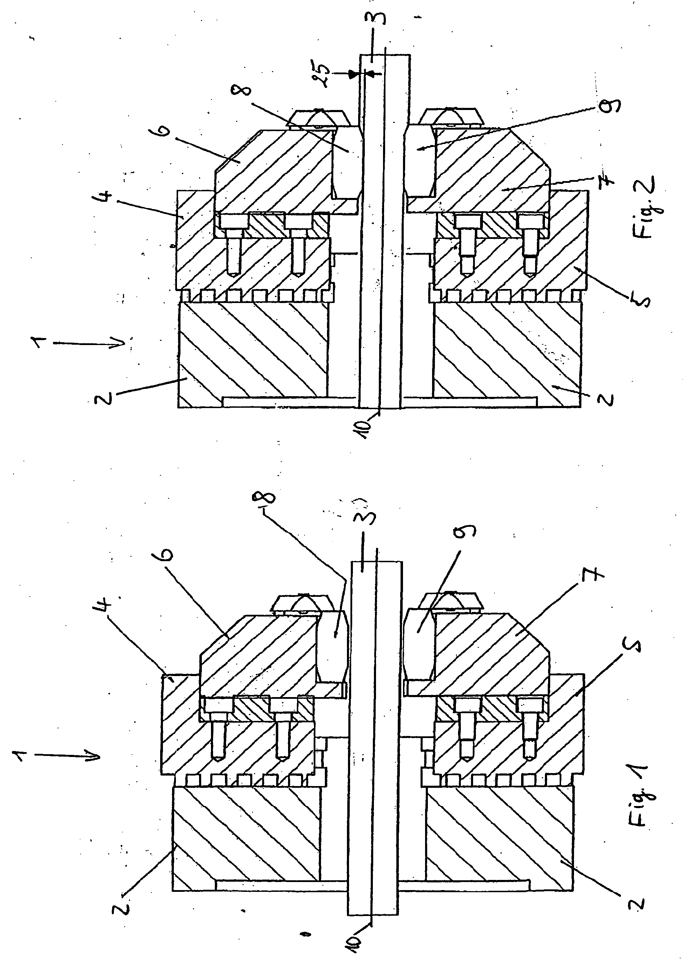

In der Figur 1 und der Figur 2 ist eine Ausführung eines Schälkopfes 1 mit einem Drehfutter 2 mit vier jeweils einen Schälmesserhalter und ein Schälmesser tragende bzw. aufweisende Futterbacken dargestellt, wobei aufgrund der Querschnittsdarstellung nur zwei der vier Futterbacken - nämlich eine erste Futterbacke 5 und eine zweite Futterbacke 6 - und nur zwei der vier Schälmesserhalter bzw. Schälmesser- nämlich ein erster Schälmesserhalter 6, ein zweiter Schälmesserhalter 7, ein erstes Schälmesser 8 und ein zweites Schälmesser 9 - dargestellt sind. Die Darstellung gemäß der Figur 1 stellt dabei eine Querschnittsdarstellung des Schälkopfes 1 dar, wobei die Schälmesser nicht in das Schälgut gepresst sind. Die Darstellung gemäß der Figur 2 stellt hingegen eine Querschnittsdarstellung des Schälkopfes 1 dar, wobei die Schälmesser 8, 9 um eine Einpressstrecke 25 in das Schälgut 3 bzw. in den Draht 3 gepresst sind. Bei einer Bewegung des Schälkopfes 1 relativ zum Schälgut 3 - insbesondere bei einer Drehung um eine im wesentlichen parallel zur Zentralachse des Drahtes 3 bzw. des Schälgutes 3 (an der Stelle des Schälkopfes 1) verlaufende Drehachse 10 des Schälkopfes 1 und/oder bei einer Vorschubbewegung des Drahtes 3 relativ zum Schälkopf 1 - wird derjenige Teil des Materials des Schälgutes 3 bzw. des Drahtes 3 abgenommen, der der Einpressstrecke 25 der Schälmesser 8, 9 in das Schälgut 3 entspricht. Durch die erfindungsgemäß aufgrund der Einstellung in ruhendem Zustand mögliche genaue Einstellbarkeit der Einpressstrecke, kann daher der Materialverbrauch besonders einfach minimiert werden und dennoch ein sehr gutes Ergebnis hinsichtlich der Oberflächenbeschaffenheit des Drahtes 3 erzielt werden.

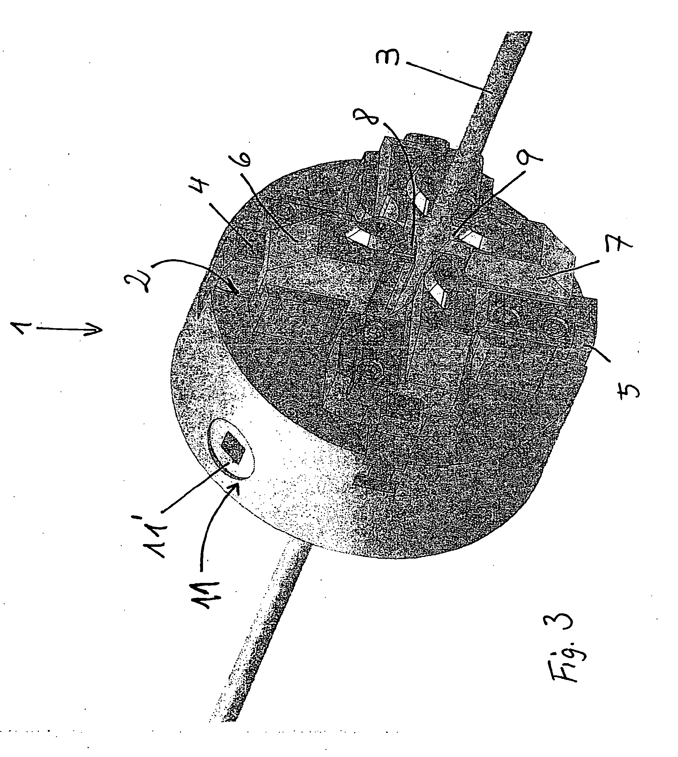

In Figur 3 ist schematisch eine perspektivische Außendarstellung des Schälkopfes 1 mit dem Drehfutter 2 und mit den vier Futterbacken dargestellt, wobei jedoch der Einfachheit halber lediglich zwei Futterbacken 4, 5 mit Bezugszeichen bezeichnet sind. Zu erkennen ist in Figur 3 ferner, dass die erste Futterbacke 4 den das erste Schälmesser 8 tragenden ersten Schälmesserhalter 6 aufweist bzw. trägt und dass die zweite Futterbacke 5 den das zweite Schälmesser 9 tragenden zweiten Schälmesserhalter 7 aufweist bzw. trägt. Die Einstellvorrichtung 11 ist in Figur 3 lediglich mittels eines Bedienelements 11' dargestellt, wobei zur Verstellung der Einstellvorrichtung 11, d.h. zur radialen Verstellung der Schälmesser 8, 9, eine Drehung des Bedienelements 11', insbesondere mittels eines passenden Werkzeugs - etwa mittels eines Inbus-Werkzeugs oder eines Vierkant-Werkzeugs - vorgesehen ist. Die eigentliche Einstellvorrichtung 11 ist im Inneren des Drehfutters 2 bzw. des Schälkopfes 1 angeordnet und weist insbesondere ein mechanisches Übersetzungsgetriebe (nicht dargestellt) auf, so dass eine Drehung des Bedienelements 11' zu einer radialen Zustellung der Schälmesser 8, 9 führt. Dieses mechanische Übersetzungsgetriebe ist insbesondere selbsthemmend ausgeführt, d.h. eine Verstellung ist nur in der Kraftflussrichtung von dem Bedienelement 11' zum Schälmesser 8, 9 bzw. zum Schälmesserhalter 6, 7 hin möglich und eine an dem Schälmesser 8, 9 angreifende Kraft in Verstellrichtung (d.h. radial ausgerichtet oder mit einer radialen Kraftkomponente) kann nicht zu einer Verstellung der Einstellvorrichtung 11 führen. Es ist ferner bevorzugt vorgesehen, dass die Übersetzung des mechanischen Übersetzungsgetriebes derart gewählt ist, dass eine manuelle und mit üblichem manuell zu benutzendem Werkzeug (insbesondere mit Hebelarmlängen von etwa 20 cm bis etwa 80 cm) vorgenommene Verstellung der Einstellvorrichtung 11 zu einer ausreichenden und ein befriedigendes Schälergebnis herbeiführenden Zustellung der Schälmesser 8, 9 führt.

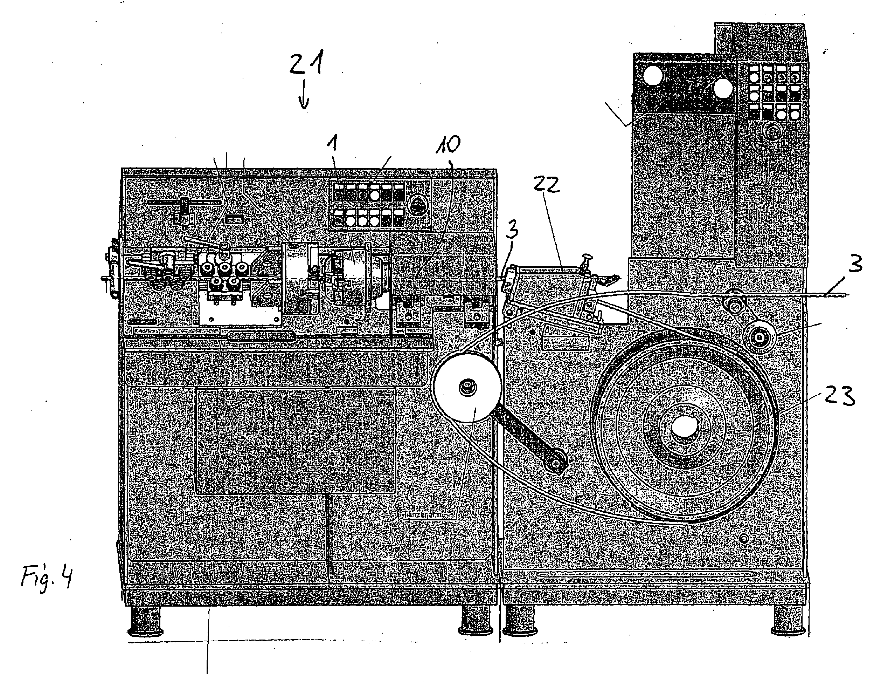

In Figur 4 ist eine schematische Abbildung einer Anordnung zur Vorbereitung von Draht 3 dargestellt, wobei die Anordnung eine Drahtschälmaschine mit einem Schälkopf 1 und ferner eine Drahtziehvorrichtung 22 und eine Ziehscheibe 23 aufweist. Die Drahtziehvorrichtung 22 weist insbesondere einen nicht eigens mit einem Bezugszeichen bezeichneten Ziehstein auf, mittels dem der Nenndurchmesser des Drahtes 3 nach dem Schälvorgang einstellt bzw. definiert wird. Die hierzu erforderlichen vergleichsweise großen Kräfte werden erfindungsgemäß insbesondere mittels der Ziehscheibe 23 ausgeübt.

### Bezugszeichenliste

- 1: Schälkopf
- 2: Drehfutter
- 3: Schälgut
- 4: erste Futterbacke
- 5: zweite Futterbacke
- 6: erster Schälmesserhalter
- 7: zweiter Schälmesserhalter
- 8: erstes Schälmesser
- 9: zweites Schälmesser
- 10: Drehachse
- 11: Einstellvorrichtung
- 11: Bedienelement
- 21: Drahtschälmaschine
- 22: Drahtziehvorrichtung
- 23: Ziehscheibe
- 25: Einpressstrecke

## Patentansprüche

1. Verfahren zum Betrieb eines Schälkopfes (1) für eine Drahtschälmaschine, wobei der Schälkopf (1) zum Umlauf um ein Schälgut (3) vorgesehen ist, wobei der Schälkopf (1) Schälmesser (8, 9) aufweist, die um eine Drehachse (10) angeordnet sind, wobei die Schälmesser (8, 9) einen einstellbaren Bearbeitungsdurchmesser des Schälgutes (3) definieren und in ihrer radialen Position zur Einstellung des Bearbeitungsdurchmesser veränderbar sind, wobei der Bearbeitungsdurchmesser ausschließlich in einem Betriebsmodus änderbar ist, in dem sich der Schälkopf (1) gegenüber dem Schälgut (3) in einem ruhenden Zustand befindet, **dadurch gekennzeichnet, dass** in einem ersten Schritt der Schälkopf (1) bereitgestellt wird, in welchem ein Schälgut (3) angeordnet ist und der Bearbeitungsdurchmesser eingestellt wird, wobei beim Einstellen des Bearbeitungsdurchmessers mittels der Einstellvorrichtung (11) die Schälmesser (8, 9) in das Schälgut (3) gepresst werden, in einem zweiten Schritt der Schälkopf (1) in Rotation um das zu schälende Gut versetzt wird, und in einem dritten Schritt der Draht längs der Drehachse (10) durch die Schälmaschine gezogen wird.

2. Verfahren nach Anspruch 1, **dadurch gekennzeichnet, dass** im dritten Schritt der Draht mittels einer Ziehscheibe (23) gezogen wird, wobei die Ziehscheibe (23) zumindest den überwiegenden Teil der Kraft aufbringt, um den Draht von der Drahtschälmaschine (21) und der Drahtziehvorrichtung (22) abzuziehen.

3. Verfahren nach einem der Ansprüche 1 oder 2, **dadurch gekennzeichnet, dass** der Arbeitsdurchmesser mit Hilfe der Einstellvorrichtung (11) eingestellt wird, wobei zur Verstellung der Einstellvorrichtung (11) ein Drehmoment ausgeübt wird, welches bevorzugt im Bereich von 20 bis 100 Nm liegt.

4. Verfahren nach einem der Ansprüche 1, 2 oder 3, **dadurch gekennzeichnet, dass** die Schälmesser (8, 9) beim Einstellen des Bearbeitungsdurchmessers mit Hilfe der Einstellvorrichtung (11) einige Zehntel Millimeter in das Schälgut (3) gepresst werden, bevorzugt 0,2 bis 0,5 mm, besonders bevorzugt 0,2 bis 0,3 mm, so dass wenigstens beim dritten Verfahrensschritt Unebenheiten und Unreinheiten von der Oberfläche des Schälgutes (3) entfernt werden.

## Claims

1. A method for operating a stripping head (1) for a wire stripping machine, wherein the stripping head (1) is provided for revolving around a product to be stripped (3), wherein the stripping head (1) encompasses stripping knives (8, 9), which are arranged around an axis of rotation (10), wherein the gripping knives (8, 9) define a settable processing diameter of the product to be stripped (3) and the radial position thereof can be changed for setting the processing diameter, wherein the processing diameter can be changed exclusively in an operating mode, in which the stripping head (1) is in a resting state compared with the product to be stripped (3), **characterized in that**, in a first step, provision is made for the stripping head (1), in which a product to be stripped (3) is arranged and the processing diameter is set, wherein, in response to the adjusting of the processing diameter by means of the setting device (11), the stripping knives (8, 9) are pressed into the product to be stripped (3), in a second step the stripping head (1) is set in rotation around the product, which is to be stripped, and in a third step the wire is drawn through the stripping machine along the axis of rotation (10).

2. The method according to claim 1, **characterized in that**, in the third step, the wire is drawn by means of a drawing disk (23), wherein the drawing disk (23) exerts at least the predominant part of the force, so as to remove the wire from the wire stripping machine (21) and the wire drawing device (22).

3. The method according to one of claims 1 or 2, **characterized in that** the working diameter is set with the help of the setting device (11), wherein a torque, which preferably lies in the range of from 20 to 100 Nm, is exerted for adjusting the setting device (11).

4. The method according to one of claims 1, 2 or 3, **characterized in that** the stripping knives (8, 9) are pressed into the product to be stripped (3) several tenth of a millimeter, preferably 0.2 to 0. 5 mm, more preferably 0.2 to 0.3 mm with the help of the setting device (11) in response to the setting of the processing diameter, so that unevenness and impurities are removed from the surface of the product to be peeled (3) at least in response to the third method step.

## Revendications

1. Procédé pour le fonctionnement d'une tête d'écroutage (1) pour une machine d'écroutage de fil métallique, dans lequel la tête d'écroutage (1) est prévue pour tourner autour d'un objet à écrouter (3), dans lequel la tête d'écroutage (1) comporte des lames d'écroutage (8, 9) montées autour d'un axe de rotation (10), dans lequel les lames d'écroutage (8, 9) définissent un diamètre de traitement réglable de l'objet à écrouter (3) et peuvent être modifiées dans leur position radiale, pour le réglage du diamètre de traitement, dans lequel le diamètre de traitement est modifiable exclusivement dans un mode de fonctionnement, dans lequel la tête d'écroutage (1) est au repos par rapport à l'objet à écrouter, **caractérisé en ce que** dans une première étape, la tête d'écroutage (1) est préparée, un objet à écrouter (3) est mis en place et le diamètre de traitement est réglé, les lames d'écroutage (8, 9) étant pressées dans l'objet à écrouter (3), lors du réglage du diamètre de traitement au moyen du dispositif de réglage (11), puis, dans une deuxième étape, la tête d'écroutage (1) est mise en rotation autour de l'objet à écrouter, et dans une troisième étape, le fil métallique est tiré à travers la machine d'écroutage, dans la longueur de l'axe de rotation (10).

2. Procédé selon la revendication 1, **caractérisé en ce que** dans la troisième étape, le fil métallique est tiré au moyen d'un disque d'étirage (23), le disque d'étirage (23) appliquant au moins la majeure partie de la force, pour retirer le fil métallique de la machine d'écroutage de fil métallique (21) et du dispositif d'étirage de fil métallique (22).

3. Procédé selon l'une des revendications 1 ou 2, **caractérisé en ce que** le diamètre de travail est réglé à l'aide du dispositif de réglage (11), un couple de rotation compris de préférence entre 20 et 100 Nm étant utilisé pour l'ajustement du dispositif de réglage (11).

4. Procédé selon l'une des revendications 1, 2 ou 3, **caractérisé en ce que** lors du réglage du diamètre de traitement, les lames d'écroutage (8, 9) sont pressées de quelques dixièmes de millimètre dans l'objet à écrouter (3), à l'aide du dispositif de réglage (11), de préférence entre 0,2 et 0,5 mm, et mieux, entre 0,2 et 0,3 mm, de manière à supprimer les irrégularités et les impuretés de la surface de l'objet à écrouter (3), au moins dans la troisième étape de procédé.
